(19) Europäisches Patentamt / European Patent Office / Office européen des brevets

(11) **EP 4 324 792 A1**

(12) **EUROPEAN PATENT APPLICATION**
published in accordance with Art. 153(4) EPC

(43) Date of publication:
**21.02.2024 Bulletin 2024/08**

(21) Application number: **22788333.7**

(22) Date of filing: **06.04.2022**

(51) International Patent Classification (IPC):
**C01D 15/06** $^{(2006.01)}$

(52) Cooperative Patent Classification (CPC):
**C01D 15/06;** Y02P 10/20

(86) International application number:
**PCT/KR2022/004946**

(87) International publication number:
**WO 2022/220477 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 KR 20210048398**

(71) Applicants:
• **Sehwa ES**
  **Gumi-si, Gyeongsangbuk-do 39396 (KR)**
• **KOREA INSTITUTE OF GEOSCIENCE AND MINERAL RESOURCES**
  **Yuseong-gu**
  **Daejeon 34132 (KR)**

(72) Inventors:
• **PARK, Young Goo**
  **Gumi-si, Gyeongsangbuk-do 39297 (KR)**
• **KIM, Min Chan**
  **Seoul 02786 (KR)**
• **PARK, Geon Yong**
  **Gumi-si, Gyeongsangbuk-do 39435 (KR)**
• **KIM, Hye Jin**
  **Daegu 42769 (KR)**
• **RYU, Tae Gong**
  **Daejeon 34090 (KR)**
• **SHIN, Jun Ho**
  **Daejeon 35359 (KR)**

(74) Representative: **Gilani, Anwar et al**
  **Venner Shipley LLP**
  **Byron House**
  **Cambridge Business Park**
  **Cowley Road**
  **Cambridge CB4 0WZ (GB)**

(54) **METHOD FOR PRODUCING LITHIUM-CONCENTRATED SOLUTION WITH HIGH RECOVERY RATE, AND METHOD FOR PRODUCING LITHIUM COMPOUND USING SAME**

(57) The present invention relates to: a method for producing a lithium compound for lithium ion recovery; and a lithium compound for lithium ion recovery, and more particularly, to a method for producing a lithium compound for lithium ion recovery, and a lithium compound for lithium ion recovery produced thereby, whereby energy consumption and the amount of alkaline solvent used during the removal of impurities can be significantly reduced compared to methods for producing a lithium solution and a lithium compound by roasting/water leaching and sulfuric acid leaching methods.

[FIG. 1]

```
Lithium raw material
(low-concentration lithium solution)
          ↓ Precipitation reaction
Insoluble lithium compound
          ↓ Hydrothermal reaction
High-concentration lithium sulfate solution
          ↓ Carbonation or hydroxylation reaction
Lithium compound
(lithium carbonate and lithium hydroxide)
```

EP 4 324 792 A1

**Description**

CROSS-REFERENCE TO RELATED APPLICATION

This application claims priority to and the benefit of Korean Patent Application No. 10-2021-0048398, filed on April 14, 2021, the disclosure of which is incorporated herein by reference in its entirety.

TECHNICAL FIELD

The present invention relates to a method for producing a lithium concentrated solution with high recovery rate and a method for producing a lithium compound using the same, and more particularly, to a method for producing a lithium ion concentrated solution that can significantly reduce energy usage and wastewater generation and significantly improve the recovery rate of lithium ions, and a lithium compound produced thereby.

BACKGROUND

As the use of fossil fuels has been pointed out global ly as a cause of global warming and environmental pollution problems, each country is expanding its policies to supply eco-friendly vehicles such as electric vehicles. Among these, the global distribution of electric vehicles is expected to increase nearly 25 times from 510,000 units in 2016 to 12.06 million units in 2030. As the electric vehicle market increases, the price of lithium hydroxide, a key raw material for EV batteries, is also increasing significantly. Due to the continuous rise in raw material prices, there is a need to develop technologies for recycling using waste lithium resources.

Raw materials for obtaining lithium ions include lithium salt lakes, waste liquid from a lithium compound producing process, lithium secondary battery cathode material washing water, and lithium secondary battery recycling process waste liquid, but these have a problem of low lithium ion recovery efficiency because the concentration of lithium ions is usually low, below 1,000 mg/L. A method of producing lithium carbonate or lithium hydroxide, which is a lithium compound for recovering lithium ions from a low-concentration lithium solution ($Li^+$ conc. < 1,000ppm), is generally a method of concentrating it into a high-concentration lithium solution by applying an adsorption method, a solvent extraction method, a precipitation method, or the like, and producing it through a carbonation reaction or a hydroxylation reaction of a lithium solution from which impurities are removed through a separation/purification process.

Another commercialization process of producing a lithium compound for lithium ion recovery is generally a method of producing a lithium carbonate and a lithium hydroxide by a carbonation reaction and a hydroxylation reaction after producing a high-concentration lithium solution by calcining a lithium-containing mineral, roasting it with sulfuric acid, and then leaching it with water, or after producing a high-concentration lithium solution through the natural evaporation and concentration process of salt lake containing lithium ions (approximately 1,000ppm).

Recently, many attempts have been made to recover lithium resources in the form of lithium ion compounds from low-concentration lithium salt lakes, lithium waste liquid, lithium compound producing process waste liquid, cathode material washing water, and lithium secondary battery recycling process waste liquid, but they are still in the research stage. In the lithium compound producing process, a high-concentration lithium solution producing process is required and accounts for the highest proportion of the process, but economic feasibility is still not secured in the high-concentration lithium solution producing stage.

Along with the increase in demand for EVs and ESS, demand for lithium secondary batteries is also rapidly increasing, and demand for cathode materials for medium and large capacities is also increasing. Lithium carbonate and lithium hydroxide are used as reactants in the production of medium and large capacity products, and a water washing process is essential after producing the cathode material.

The lithium waste liquid generated during water washing shows a lithium ion concentration of about 1,000 to 1,500 mg/L, and it is expected that the amount of cathode material washing water generated will increase as the amount of production of cathode materials rapidly increases.

As a method of producing a high-concentration lithium solution from an insoluble lithium compound, it is common to produce lithium carbonate and lithium hydroxide through carbonation reaction and hydroxylation reaction by producing an insoluble lithium compound as a lithium sulfate or lithium chloride solution using an acid solution and then separating impurities using alkaline solvents such as CaO and NaOH and convert ing it into a lithium solut ion under alkaline conditions. However, because this method uses a strong acid solution when producing a high-concentration lithium solution, the use of an excessive amount of alkaline solvent is inevitable in the subsequent process, and there is a problem with the environmental load of excessive waste sediment and waste liquid being discharged.

In addition to these, a method of converting an insoluble lithium compound into water-soluble lithium sulfate or lithium chloride through a salt roasting reaction with sulfur oxide or chloride and then water leaching it to produce a high-concentration solution has been proposed, but this method has the disadvantage of lowering economic feasibility due to high energy consumption and lowering the recovery rate of lithium ions because it requires repeated water leaching to produce a high-concentration lithium solution.

Therefore, research is in progress to find new processes to solve these problems.

(Related Art Document 1) Korean Patent Registration No. 10-1957706 (registered 2019.03.07.)

## SUMMARY OF THE INVENTION

### Technical Problem

The present invention is directed to providing a method of producing a lithium compound for lithium ion recovery that is environmentally friendly, a lithium compound for lithium ion recovery formed thereby because it can recover lithium ions at a high recovery rate by producing a high-concentration lithium sulfate solution, and at the same time, the amount of alkaline solvent used is significantly reduced and energy consumption can be reduced.

### Technical Solution

In order to solve the above-mentioned problem, the present invention provides a method for producing a lithium compound with high recovery rate, the method including: 1) precipitating an insoluble lithium compound from a raw material solution containing lithium ions; 2) producing a lithium sulfate aqueous solution by hydrothermally reacting the insoluble lithium compound with a compound having the structure of the following General Formula 1; and 3) obtaining a lithium compound for lithium ion recovery from the lithium sulfate aqueous solution:

$$[General\ Formula\ 1] \quad\quad A_x(SO_y)_z$$

where, in General Formula 1, A is one or more cations selected from magnesium, calcium, sodium, potassium, iron (Fe), ammonium, and aluminum, y is an integer of 2 to 4, and z is 1 or 3.

In a preferred embodiment of the present invention, the insoluble lithium compound may be one or more selected from lithium phosphate ($Li_3PO_4$), lithium fluoride (LiF), and lithium aluminate ($LiAlO_2$).

In a preferred embodiment of the present invention, in step 1), a precipitant may be added to the raw material solution to precipitate the insoluble lithium compound, and the precipitant may be added at an equivalent ratio of 0.5 to 5 with respect to the lithium ions in the raw material solution.

In a preferred embodiment of the present invention step 1) may include: 1-1) a pretreatment step of producing the rawmaterial solution by concentrating lithium ions in a low-concentration lithium solution through a membrane capacitive deionization process (MCDI); and 1-2) precipitating an insoluble lithium compound from the raw material solution.

In a preferred embodiment of the present invention, the low-concentration lithium solution may be derived from one or more of lithium salt lakes, waste liquid from a lithium compound producing process, lithium secondary battery cathode material washing water, and lithium secondary battery recycling process waste liquid.

In a preferred embodiment of the present invention, in step 1-1), lithium ion concentrations of the low-concentration lithium solution and the raw material solution may satisfy the following relational formulas (1) and (2):

$$(1)\quad 1.5 \leq \frac{C_{Li,conc}}{C_{Li,low}} \leq 5$$

$$(2)\quad 2000mg/L \leq C_{Li,conc} \leq 4000mg/L$$

In the above relational formulas (1) and (2), $C_{Li,raw}$ represents the concentration of lithium ions contained in the low-concentration lithium solution and $C_{Li,conc}$ represents the concentration of lithium ions contained in the raw material solution.

In a preferred embodiment of the present invention, step 1-1) may be performed repeatedly, and when repeating the capacitive deionization process, after lithium ions are adsorbed on the electrode, the remaining solution in the electrode may be removed while maintaining the potential at 0.7 to 1.5 V before repeating the capacitive deionization process.

In a preferred embodiment of the present invention, the compound represented by General Formula 1 in step 2) may be one or more selected from magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na2SO_4$),

sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfite ($Fe_2(SO_3)_3$), ferric hyposulfite ($Fe_2(SO_2)_3$), ammonium sulfate ($(NH_4)_2SO_4$), aluminum sulfate ($Al_2(SO_4)_3$), aluminum sulfite ($Al_2(SO_3)_3$), and aluminum hyposulfite ($Al_2(SO_2)_3$).

In a preferred embodiment of the present invention, in step 2), the insoluble lithium compound is subjected to a hydrothermal reaction with an aqueous solution of a compound having the structure of General Formula 1 at a temperature of 40 to 300 °C, and it can be performed while satisfying the following relational formulas (3) and (4):

$$(3) \quad 50(g/L) \leq \frac{m_{unsol}}{V_{sol}} \leq 500(g/L)$$

$$(4) \quad 0.2 \leq \frac{n_{Li^+}}{n_S} \leq 10$$

In the above relational formulas (3) and (4), $m_{unsol}$ represents the mass (g) of the insoluble lithium compound introduced into the hydrothermal reaction, $V_{sol}$ represents the volume (L) of the aqueous solution of the compound having the structure of General Formula 1 introduced into the hydrothermal reaction, $n_{Li^+}$ represents the number of moles of lithium ions introduced into the hydrothermal reaction, and $n_S$ represents the number of moles of sulfur (S) atoms in the aqueous solution of the compound having the structure of General Formula 1.

In a preferred embodiment of the present invention, the lithium sulfate aqueous solution produced in step 2) may contain lithium ions at a concentration of 20,000 to 34,000 mg/L.

In a preferred embodiment of the present invention, step 3) may include: 3-1) purifying the lithium sulfate aqueous solution with an alkaline solvent; and 3-2) performing a carbonation reaction or hydroxylation reaction on the purified lithium sulfate aqueous solution to obtain lithium carbonate or lithium hydroxide. In addition, in a preferred embodiment of the present invention, in step 3-1), it is purified with an alkaline solvent and the pH may be adjusted to 9 to 12.5.

In a preferred embodiment of the present invention, the lithium compound for lithium ion recovery may be a lithium compound for cathode material raw materials.

### Advantageous Effects

According to the present invention, lithium ions can be recovered with high efficiency, and at the same time, energy consumption and the amount of alkaline solvent used for purification can be significantly reduced, which has the advantage of recovering lithium ions in an environmentally friendly manner.

### BRIEF DESCRIPTION OF THE DRAWINGS

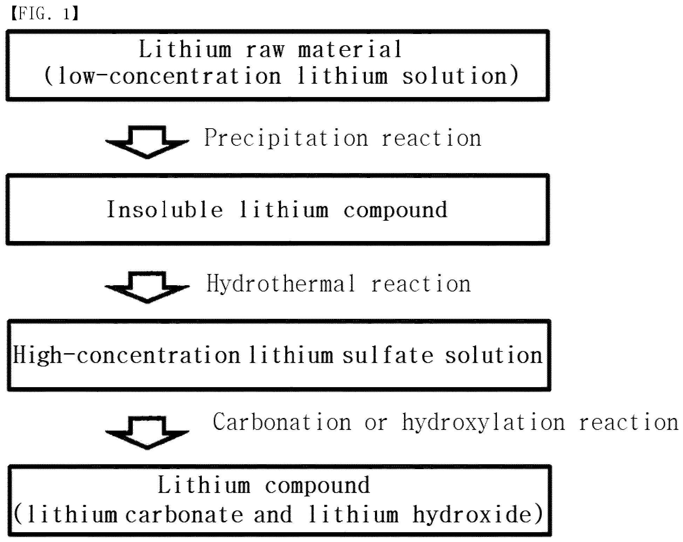

FIG. 1 is a diagram showing each step of a method for producing a lithium compound for lithium ion recovery according to a preferred embodiment of the present invention.

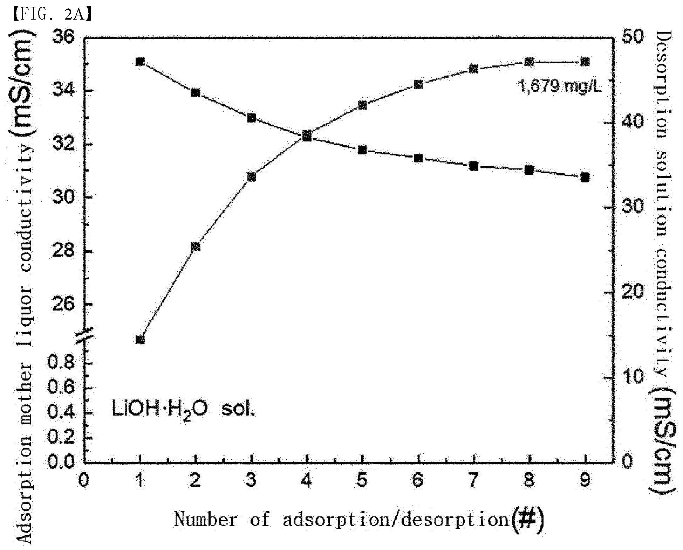

FIG. 2A is a graph showing changes in the lithium ion concentration (desorption solution conductivity, blue) of the desorbed solution and the lithium ion concentration (adsorption mother liquor conductivity, black) of the mother liquor according to the number of repetitions when a lithium hydroxide aqueous solution having a lithium ion concentration of about 1,000 mg/L is repeatedly concentrated through a membrane capacitive deionization process.

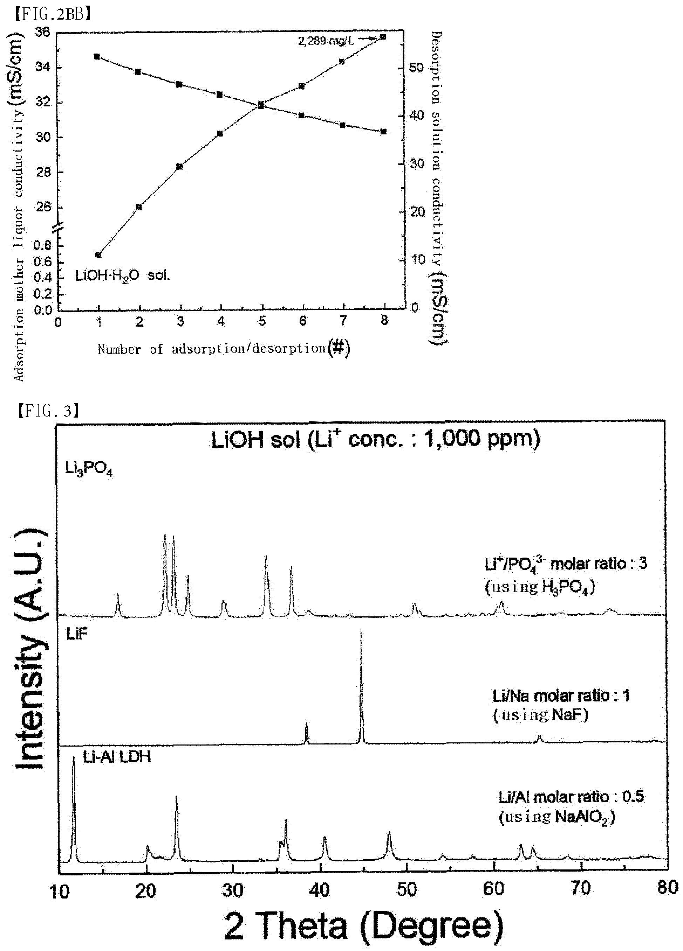

FIG. 2B is a graph showing changes in the lithium ion concentration (desorption solution conductivity, blue) of the desorbed solution and the lithium ion concentration (adsorption mother liquor conductivity, black) of the mother liquor according to the number of repetitions when the residual solution in the electrode is removed by a method according to a preferred embodiment of the present invention with about 1,000 mg/L of a lithium hydroxide aqueous solution, and lithium ions are concentrated by repeatedly performing a membrane capacitive deionization process.

FIG. 3 shows an XRD spectrum (yellow) of a precipitate precipitated by reacting a phosphoric acid-based precipitant with a molar ratio of $Li^+/PO_4^{3-}$ of 3; an XRD spectrum (blue) of a precipitate precipitated by reacting a fluoride precipitant with a molar ratio of $Li^+/Na^+$ of 1; and an XRD spectrum (red) of a precipitate precipitated by reacting an aluminate ($NaAlO_2$)-based precipitant with a molar ratio of Li/Al of 0.5, respectively in a lithium hydroxide aqueous solution having a concentration of about 1,000 mg/L.

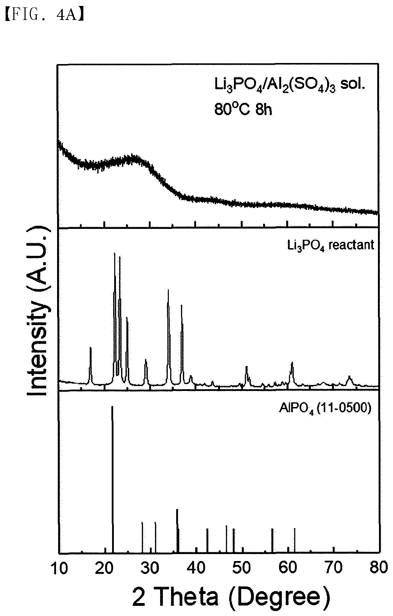

FIG. 4A shows an XRD spectrum for a precipitate (top) produced by a hydrothermal reaction; an XRD spectrum of an insoluble lithium compound (center) used in a hydrothermal reaction; and a reference XRD spectrum for a precipitate ($AlPO_4$) (bottom) produced by a hydrothermal reaction of a lithium phosphate and aluminum sulfate solution, when an insoluble lithium compound $Li_3PO_4$ is hydrothermally reacted with an $Al_2(SO_4)_3$ aqueous solution at 80 °C for 8 hours, according to a preferred embodiment of the present invention. From the experimental results, it was confirmed that the precipitate produced by the hydrothermal reaction of lithium phosphate and aluminum sulfate solutions exhibited amorphous characteristics.

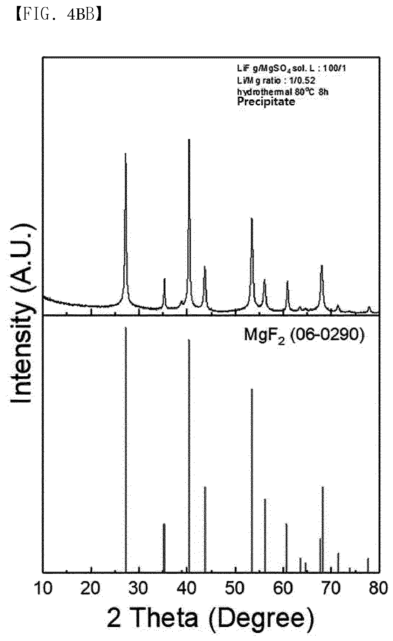

FIG. 4B shows a comparison between an XRD spectrum (top) of a precipitate obtained by performing a hydrothermal reaction at 80 °C for 8 hours with an insoluble lithium compound LiF of 100:1 solid-liquid ratio of a $MgSO_4$ aqueous solution and a LiF mass (g) to a $MgSO_4$ aqueous solution volume (L) and a Li/Mg molar ratio of 1:2, and a reference XRD spectrum (bottom) for $MgF_2$, according to a preferred embodiment of the present invention.

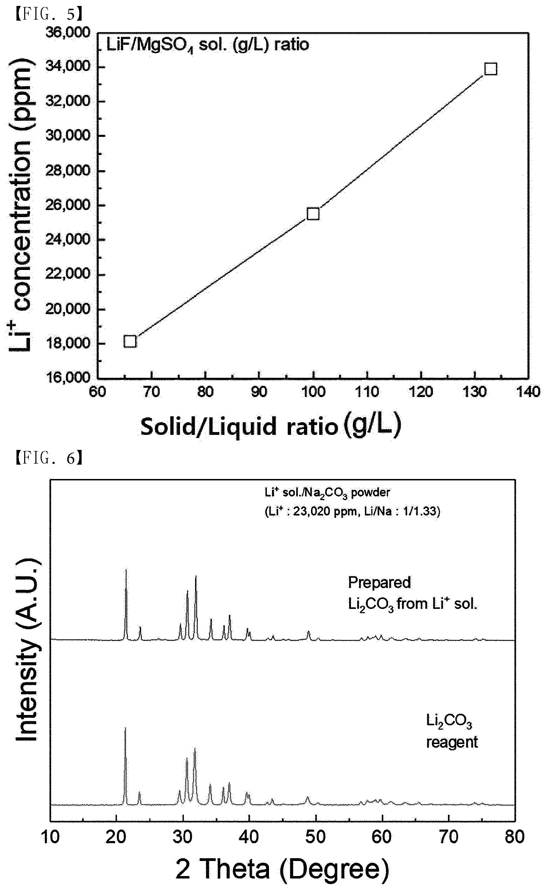

FIG. 5 is a graph showing the change in lithium ion concentration of the lithium sulfate aqueous solution produced according to the solid-liquid ratio of the insoluble lithium compound LiF and $MgSO_4$ aqueous solution when the insoluble lithium compound LiF and an aqueous solution of $MgSO_4$ were subjected to a hydrothermal reaction at a molar ratio of Li and Mg of 1.92:1, according to a preferred embodiment of the present invention.

FIG. 6 shows a comparison of an XRD spectrum of lithium carbonate (top) and an XRD spectrum of $Li_2CO_3$ reagent (bottom) obtained according to a preferred embodiment of the present invention.

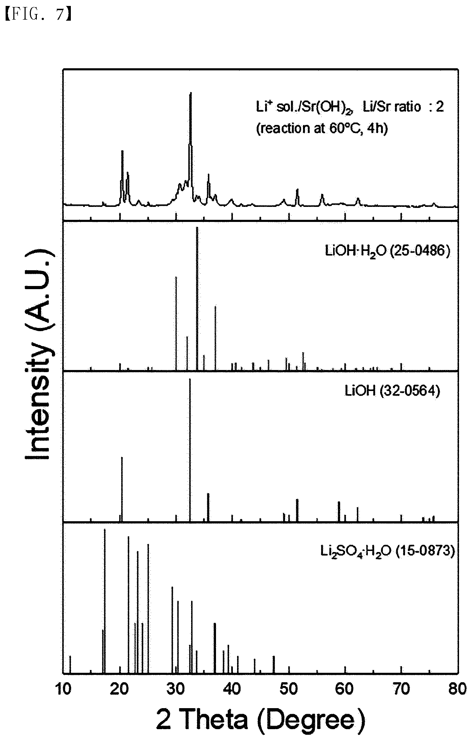

FIG. 7 is a comparison of XRD spectra of lithium hydroxide (top), lithium hydroxide monohydrate (second), lithium hydroxide anhydride (third), and lithium sulfate monohydrate (bottom) obtained according to a preferred embodiment of the present invention.

**Best Mode for Carrying Out the Invention**

As described above, the conventional lithium ion recovery method had the disadvantage of having a poor recovery rate, consuming excessive energy during the recovery process, or generating a large amount of waste liquid after recovery, resulting in a burden on the environment.

Accordingly, in order to solve the above-mentioned problem, the present inventors sought to solve this problem by providing a method for producing a lithium compound with high recovery rate, the method including: 1) precipitating an insoluble lithium compound from a raw material solution containing lithium ions; 2) producing a lithium sulfate aqueous solution by hydrothermally reacting the insoluble lithium compound with a compound having the structure of the following General Formula 1; and 3) obtaining a lithium compound for lithium ion recovery from the lithium sulfate aqueous solution.

$$[\text{General Formula 1}] \qquad A_x(SO_y)_z$$

where, in General Formula 1, A is one or more cations selected from magnesium, calcium, sodium, potassium, iron (Fe), ammonium, and aluminum, y is an integer of 2 to 4, and z is 1 or 3.

The present invention is an economical method for reducing energy consumption since it reacts an insoluble lithium compound with the compound represented by General Formula 1 above through a hydrothermal synthesis reaction, so that the reaction can be performed at a significantly lower temperature compared to conventional salt roasting or calcination reactions, and compared to a method of producing a lithium compound aqueous solution such as a lithium sulfate aqueous solution or a lithium chloride aqueous solution using strong acids (sulfuric acid, hydrochloric acid, etc.), the present invention may remarkably reduce the amount of an alkaline solvent used to recover a lithium compound for recovering a lithium ion from a lithium compound aqueous solution, thereby being economical and reducing environmental pollution caused by waste liquid.

Hereinafter, each step will be described.

First, step 1) is a step of producing an insoluble lithium compound, which is a reactant for producing a highly concentrated lithium ion solution in order to produce a lithium compound with high recovery rate, and a step of precipitating an insoluble lithium compound through a reaction from a solution containing lithium ions.

Preferably, step 1) may further include a pretreatment step. That is, preferably, step 1) includes: 1-1) a pretreatment step of producing the raw material solution by concentrating lithium ions in a low-concentration lithium solution through a membrane capacitive deionization process (MCDI); and 1-2) precipitating an insoluble lithium compound from the raw material solution.

The source of lithium-containing raw materials for recovering lithium ions may be preferably derived from one or more of lithium salt lakes, waste liquid from a lithium compound producing process, lithium secondary battery cathode material washing water, and lithium secondary battery recycling process waste liquid, but it is not limited thereto.

Since these sources of lithium ions generally have a low lithium ion concentration, the amount of insoluble lithium compounds precipitated by precipitation reaction is inevitably small, which causes the problem of low recovery rate of lithium ions. Therefore, in order to improve the recovery rate of lithium ions, it is desirable to concentrate the concentration of lithium ions.

Preferably, the lithium ion-concentrated solution is a raw material solution, and the lithium ion concentration of the raw material solution may satisfy both the following relational formulas (1) and (2):

$$(1) \quad 1.5 \le \frac{C_{Li,conc}}{C_{Li,low}} \le 5$$

$$(2) \quad 2000mg/L \le C_{Li,conc} \le 4000mg/L$$

In the above relational formulas (1) and (2), $C_{Li,raw}$ represents the concentration of lithium ions contained in the low-concentration lithium solution and $C_{Li,conc}$ represents the concentration of lithium ions contained in the raw material solution.

If the lithium ion concentration is concentrated to less than 1.5 times or the lithium ion concentration of the concentrated raw material solution is less than 2000 mg/L, since the lithium ion concentration of the raw material solution is low, there may be a problem that the amount of insoluble lithium compound that can be obtained through precipitation reaction is significantly reduced, and in order for the concentrated concentration to be more than 5 times greater than before concentration or to have a lithium ion concentration exceeding 4000 mg/L, more time and energy must inevitably be invested in the concentration process, and this makes it difficult to achieve the purpose of the present invention, which is to improve economic efficiency, in the production of lithium compounds for lithium ion recovery according to the present invention.

In step 1-1), lithium ions may be concentrated using a membrane capacitive deionization process. In addition, when performing the membrane capacitive deionization process, the concentration of lithium ions is continuously concentrated as lithium ions are repeatedly adsorbed and desorbed on the electrode, and in order to further concentrate lithium ions above a certain level, it is possible to perform an operation of removing residual solution in the electrode between adsorption and desorption. In this case, the system potential of the membrane capacitive deionization process is maintained the same overall, and is preferably set to 0.7 to 1.5 V.

Step 1-1) may be preferably repeated 5 or more times. More preferably, it may be performed repeatedly 8 or more times. As the number of repetitions increases, the process cost increases, but the concentration of lithium ions also increases. If the repetition is less than 5 times, the lithium ion concentration of 2,000 mg/L cannot be reached, making it difficult to achieve the purpose of the present invention in the subsequent process.

An insoluble lithium compound is obtained through step 1-2), and the insoluble lithium compound can preferably be obtained by precipitating a lithium compound from the concentrated raw material solution.

In a preferred embodiment of the present invention, the insoluble lithium compound may be one or more selected from lithium phosphate ($Li_3PO_4$), lithium fluoride (LiF), and lithium aluminate ($LiAlO_2$).

In a preferred embodiment of the present invention, in step 1-2), a precipitant may be added to the raw material solution to precipitate the insoluble lithium compound, and the precipitant may be added at an equivalent ratio of 0.5 to 5 with respect to the lithium ions in the raw material solution.

If the equivalence ratio is less than 0.5, unreacted lithium remains and sufficient insoluble lithium compounds cannot be generated, which may lower the recovery rate, and if the equivalence ratio exceeds 5, there may be a problem of reduced economic efficiency due to excessive input of raw materials.

In the next step 2), a high-concentration lithium concentrated solution is produced by reacting the insoluble lithium compound with an aqueous solution containing the compound represented by General Formula 1 above. Preferably, a lithium sulfate aqueous solution may be produced. The lithium compound, which is the object of the present invention, can be obtained with high recovery from the lithium sulfate aqueous solution.

In this specification, "lithium sulfate" refers to the concept of a sulfur-containing lithium compound that includes not only lithium sulfate but also compounds with some differences in the number of oxygen and oxidation state of sulfur, such as lithium sulfite and lithium hyposulfite.

In a preferred embodiment of the present invention, the compound represented by General Formula 1 in step 2) may be one or more selected from magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na2SO_4$), sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfite ($Fe_2(SO_3)_3$), ferric hyposulfite ($Fe_2(SO_2)_3$), ammonium sulfate (($NH_4)_2SO_4$), aluminum sulfate ($Al_2(SO_4)_3$), aluminum sulfite ($Al_2(SO_3)_3$), and aluminum hyposulfite ($Al_2(SO_2)_3$). However, it is not necessarily limited thereto.

In a preferred embodiment of the present invention, in step 2), the insoluble lithium compound is subjected to a hydrothermal reaction with an aqueous solution of a compound having the structure of General Formula 1 at a temperature of 40 to 300 °C, and it can be performed while satisfying the following relational formulas (3) and (4):

$$(3) \quad 50(g/L) \leq \frac{m_{unsol}}{V_{sol}} \leq 500(g/L)$$

$$(4) \quad 0.2 \leq \frac{n_{Li^+}}{n_S} \leq 10$$

In the above relational formulas (3) and (4), $m_{unsol}$ represents the mass (g) of the insoluble lithium compound introduced into the hydrothermal reaction, $V_{sol}$ represents the volume (L) of the aqueous solution of the compound having the structure of General Formula 1 introduced into the hydrothermal reaction, $n_{Li^+}$ represents the number of moles of lithium ions introduced into the hydrothermal reaction, and $n_S$ represents the number of moles of sulfur (S) atoms in the aqueous solution of the compound having the structure of General Formula 1.

The $m_{unsol}/V_{sol}$ is called the solid-liquid ratio, and if the solid-liquid ratio is less than 50 g/L, there may be a disadvantage in that the lithium ion concentration of the produced lithium sulfate aqueous solution decreases. Therefore, there is a problem that the recovery rate of lithium ions is lowered, and a large amount of solvent must be used, which increases the burden on the environment. If the solid-liquid ratio exceeds 300 g/L, the lithium ion concentration of the lithium sulfate aqueous solution increases, but even if the solid-liquid ratio is increased further, the concentration does not increase any further due to the solubility of lithium sulfate itself, so it is desirable to set the solid-liquid ratio as the upper limit to 500 g/L to reduce material costs.

In a preferred embodiment of the present invention, the lithium sulfate aqueous solution produced in step 2) may contain lithium ions at a concentration of 10,000 to 34,000 mg/L. If the concentration of lithium ions is less than 10,000 mg/L, there may be a problem of reduced recovery rate, and if it exceeds 34,000 mg/L, it is difficult to achieve due to the solubility of lithium sulfate.

Next, step 3) will be described. A lithium compound is obtained through step 3), and lithium ions can be recovered by obtaining a lithium compound in a form that can be used directly. Such a lithium compound is called a lithium compound for lithium ion recovery, and is preferably lithium carbonate or lithium hydroxide. However, it is not necessarily limited thereto.

In a preferred embodiment of the present invention, step 3) may include: 3-1) purifying the lithium sulfate aqueous solution with an alkaline solvent; and 3-2) performing a carbonation reaction or hydroxylation reaction on the purified lithium sulfate aqueous solution to obtain lithium carbonate or lithium hydroxide.

The carbonation reaction is performed by reacting with $CO_2$ or $Na_2CO_3$, and may preferably be performed by reacting a purified lithium sulfate aqueous solution with $Na_2CO_3$, and the hydroxylation reaction may preferably be performed by reacting with $Sr(OH)_2$.

In addition, in a preferred embodiment of the present invention, in step 3-1), it is purified with an alkaline solvent and the pH may be adjusted to 9 to 12.5. If the pH is less than 9, there may be a problem with remaining impurities, and if it exceeds 12.5, there may be a problem of reduced economic efficiency and environmental load due to the use of an excessive amount of alkaline solvent.

In addition, the lithium compound for lithium ion recovery obtained in this way may preferably be used as a cathode material.

Mode for Carrying Out the Invention

Hereinafter, the present invention will be described in more detail through examples and comparative examples. However, the scope of the present invention is not limited by the following examples, and other configurations other than the core configuration of the present invention can be easily implemented by a person skilled in the art by adding/changing and deleting them in light of the technical common sense at the time of application, but such embodiments are also naturally included in the technical idea of the present invention.

<Examples>

1) MCDI concentration process

To measure the recovery rate of lithium ions, a lithium hydroxide aqueous solution with a lithium ion concentration of about 1,000 mg/L was prepared and the MCDI process was performed. The MCDI process was performed using the WonATech equipment (MP2) and used with the positive and negative electrodes, the supply flow rate of the lithium hydroxide aqueous solution (adsorption mother liquor) during adsorption was 200 mL/min, and the supply flow rate of distilled water (desorption solution) during desorption was also 200 mL/min. The potential of the MCDI system during adsorption and desorption was the same at 1.3 V, respectively.

Example 1: Between adsorption and desorption, the adsorption and desorption processes were performed without removing the solution remaining in the electrode while maintaining the potential after the lithium ions were adsorbed on the electrode. The lithium ion concentration of the lithium solution that changed while performing the concentration process 1 to 9 times was measured as the conductivity of the adsorption mother liquor and the desorption solution, and is shown in FIG. 2A below.

Example 2: The concentration process was performed the same procedure as in Example 1, except that between the adsorption and desorption, after the lithium ions were adsorbed on the electrode, the solution remaining in the electrode was removed by air flow method while maintaining the potential, and the desorption solution was circulated. The lithium ion concentration of the lithium solution that changed while performing the concentration process 1 to 8 times was measured as the conductivity of the adsorption mother liquor and the desorption solution, and is shown in FIG. 2B below.

Referring to FIGS. 2A and 2B, in performing the MCDI process, in the process according to Example 1 in which the residual solution in the electrode is not removed after adsorption and before desorption, it was confirmed that as the number of adsorption/desorption increased, the concentration of lithium ions converged to 1,679 mg/L when the number of adsorption/desorption was 8 or more. On the other hand, in Example 2, when the residual solution in the electrode was removed and the process was repeated eight times, it was confirmed that the lithium ions were more than twice as concentrated as in Example 1 at a concentration of 2,289 mg/L.

2) Precipitation reaction process

Using a lithium raw material solution, lithium hydroxide aqueous solutions with lithium ion concentrations of 1,000 mg/L, 2,000 mg/L, and 3,000 mg/L, respectively, were prepared.

$H_3PO_4$, NaF, and $NaAlO_2$ were prepared as precipitants. 1/3 mol, 1 mol, and 1/2 mol of $H_3PO_4$, NaF, and $NaAlO_2$, respectively, is equivalent to 1 mol of LiOH.

Among the lithium raw material solutions, by taking one with a lithium ion concentration of about 1,000 mg/L, three solution samples were prepared, and the precipitation reaction was performed by adding the precipitants in an amount equivalent to lithium hydroxide, respectively, and an XRD spectrum of each precipitated precipitate was measured and shown in FIG. 3. Referring to FIG. 3, when $H_3PO_4$ was added as an additive, $Li_3PO_4$ was precipitated as an insoluble lithium compound, and when NaF was added, LiF was precipitated as an insoluble lithium compound, and when $NaAlO_g$ was added, $LiAlO_2$ was precipitated as an insoluble lithium compound.

In addition, the precipitation reaction was performed by varying the lithium ion concentration of the lithium raw material solution and the amount of precipitant added as shown in Table 1 below, and the recovery rates of lithium ions recovered as precipitates were compared.

The recovery rate was measured according to Equation 1 below.

[Equation 1]

$$\text{Recovery rate}(\%) = \frac{Li^+ concentration\ before\ precipitation\left(\frac{mg}{L}\right) - Li^+ concentration\ after\ precipitation\left(\frac{mg}{L}\right)}{Li^+ concentration\ before\ precipitation\left(\frac{mg}{L}\right)} \times 100$$

[Table 1]

| Classification | Lithium ion concentration before precipitation (mg/L) | Precipitant | Added equivalent amount | Lithium ion concentration after precipitation (mg/L) | Recovery rate (%) |
|---|---|---|---|---|---|
| Example 3 | 1069.34 | $H_3PO_4$ | 1.00 | 200.99 | 81.20 |
| Example 4 | 1069.34 | $H_3PO_4$ | 1.25 | 582.74 | 45.51 |

(continued)

| Classification | Lithium ion concentration before precipitation (mg/L) | Precipitant | Added equivalent amount | Lithium ion concentration after precipitation (mg/L) | Recovery rate (%) |
|---|---|---|---|---|---|
| Example 5 | 1069.34 | $H_3PO_4$ | 1.50 | 778.24 | 27.22 |
| Example 6 | 2176.32 | $H_3PO_4$ | 1.00 | 111.76 | 94.86 |
| Example 7 | 2176.32 | $H_3PO_4$ | 1.25 | 605.47 | 72.18 |
| Example 8 | 2176.32 | $H_3PO_4$ | 1.50 | 943.56 | 56.64 |
| Example 9 | 3313.52 | $H_3PO_4$ | 1.00 | 135.3 | 95.92 |
| Example 10 | 3313.52 | $H_3PO_4$ | 1.25 | 779.66 | 76.47 |
| Example 11 | 3313.52 | $H_3PO_4$ | 1.50 | 2475.66 | 25.29 |

Referring to Table 1 above, in the case of Examples 3 to 5, where the lithium ion concentration before precipitation was about 1,000 mg/L, when the precipitant was added at 1.00 times the equivalent weight, the lithium ions in the insoluble lithium compound had a recovery rate of 81.20% compared to the lithium ion concentration before precipitation, but it was found that the lithium raw material solutions according to Examples 6 to 11, where the lithium ion concentration before precipitation was 2,000 mg/L or more, had significantly improved lithium ion recovery rates of 94.86% and 95.92%, respectively, for the same precipitant equivalent.

Therefore, it can be seen that when lithium ions are concentrated to 2,000 mg/L or more from a low concentration lithium ion raw material solution through the MCDI process, the recovery rate of lithium ions can be improved in the insoluble lithium compound precipitation reaction.

In addition, by comparing Example 3 with Examples 4 and 5, Example 6 with Examples 7 and 8, and Example 9 with Examples 10 and 11, it can be seen that the recovery rate decreases rapidly when the amount of precipitant added is more than 1.25 equivalents. Therefore, it was found that it is preferable to add 1 equivalent of the precipitant, but it is preferable to add 0.9 to 1.05 equivalents, and if more additives are added, the recovery rate decreases.

3) Hydrothermal reaction process

LiF, $Li_3PO_4$, and $LiAlO_2$, which is the insoluble lithium compounds precipitated in step 2), were hydrothermally reacted with a sulfur oxide aqueous solution as follows to produce a high-concentration lithium sulfate aqueous solution. The hydrothermal reaction was carried out for 1 to 8 hours, and as shown in Table 2 below, the lithium ion concentration of the lithium sulfate aqueous solution obtained by adjusting the sulfate, solid-liquid ratio (mass of insoluble lithium compound (g) compared to volume (L) of sulfur oxide aqueous solution), and lithium-sulfur molar ratio of the insoluble lithium compound and sulfur oxide aqueous solution was measured.

[Table 2]

| | Insoluble lithium compound | Sulfur oxide aqueous solution (sulfur oxide) | Li-S molar ratio (nLi/ns) | Solid-liquid ratio (g/L) | Lithium sulfate aqueous solution lithium concentration (mg/L) |
|---|---|---|---|---|---|
| Example 12 | LiF | $MgSO_4$ | 1.92 | 100 | 25,542 |
| Example 13 | $Li_3PO_4$ | $Al_2(SO4)_3$ | 2.00 | 200 | 26,731 |
| Example 14 | $LiAlO_2$ | $MgSO_4$ | 1.92 | 200 | 7,178 |
| Example 15 | LiF | $MgSO_4$ | 1.92 | 66 | 18,137 |

(continued)

|  | Insoluble lithium compound | Sulfur oxide aqueous solution (sulfur oxide) | Li-S molar ratio (nLi/ns) | Solid-liquid ratio (g/L) | Lithium sulfate aqueous solution lithium concentration (mg/L) |
|---|---|---|---|---|---|
| Example 16 | LiF | $MgSO_4$ | 1.92 | 133 | 33,883 |

A graph showing the lithium ion concentrat ion of the lithium sulfate aqueous solution produced according to Examples 12, 15, and 16 according to the solid-liquid ratio is shown in FIG. 5. It was found that as the solid-liquid ratio increased, the lithium ion concentration of the lithium sulfate aqueous solution increased.

4) Purification and carbonation/hydroxylation reaction

To purify the lithium sulfate aqueous solution produced according to Example 16, titration was performed using calcium hydroxide ($Ca(OH)_2$). It was titrated so that the pH was 10 or higher, and because the pH was higher than when the lithium sulfate solution was produced by the conventional sulfuric acid leaching method, titration was possible using a smaller amount of alkaline solution.

In addition, carbonation reaction and hydroxylation reaction were performed on a lithium sulfate solution titrated with calcium hydroxide as follows.

The carbonation reaction was performed by adding $Na_2CO_3$ powder to the titrated lithium sulfate solution and the hydroxylation reaction was performed by adding $Sr(OH)_2$ powder, and $Na_2CO_3$ was added by adjusting the molar ratio of Li and Na to 3:4 and $Sr(OH)_2$ was added by adjusting the molar ratio of Li and Sr to 2:1.

By pre-performing a purification reaction using calcium hydroxide, the amount of sulfate ions could be reduced, thereby reducing the amount of $Na_2CO_3$ and $Sr(OH)_2$ used.

Lithium carbonate and lithium hydroxide crystals were obtained by performing recrystallization after the carbonation reaction or hydroxylation reaction, and the XRD spectra were measured. The XRD spectrum of lithium carbonate was compared with the reference XRD spectrum of lithium carbonate reagent and is shown in FIG. 6, and the XRD spectrum of lithium hydroxide was compared with the reference XRD spectrum of lithium hydroxide, the reference XRD spectrum of lithium hydroxide hydrate, and the reference XRD spectrum of lithium sulfate and is shown in FIG. 7.

Referring to FIGS. 6 and 7, it was confirmed that lithium carbonate was obtained in the carbonation reaction, and that lithium hydroxide and a hydrate of lithium hydroxide were obtained in the hydroxylation reaction.

- This work was supported by the Industrial Strategic Technology Development Program-Strategic core material Independent technology development project (20010193, Development of Electrode Fabrication Technology using Pitch for MCDI System Applied to Lithium Recovery from Low Grade Brine and Waste Solution and Manufacturing Technology of Lithium Compound for anode material of Lithium secondary batteries) funded By the Ministry of Trade, Industry & Energy(MOTIE, Korea).

- This work was supported by the Industrial Strategic Technology Development Program-Material parts technology development project(package type) (20024238, Development of manufacturing technology for >99.5%-grade cathode raw materials (lithium compounds, NCM/NCA) by up-cycling from waste box saggar and zero emission discharge by recycling of whole by-products) funded By the Ministry of Trade, Industry & Energy(MOTIE, Korea).

**Claims**

1.  A method for producing a lithium compound with high recovery rate, comprising:

    1) precipitating an insoluble lithium compound from a raw material solution containing lithium ions;
    2) producing a lithium sulfate aqueous solution by hydrothermally reacting the insoluble lithium compound with a compound having the structure of the following General Formula 1; and
    3) obtaining a lithium compound for lithium ion recovery from the lithium sulfate aqueous solution:

    [General Formula 1]     $A_x(SO_y)_z$

    where, in General Formula 1, A is one or more cations selected from magnesium, calcium, sodium, potassium, iron (Fe), ammonium, and aluminum, y is an integer of 2 to 4, and z is 1 or 3.

2. The method for producing a lithium compound with high recovery rate of claim 1, wherein the insoluble lithium compound is one or more selected from lithium phosphate ($Li_3PO_4$), lithium fluoride (LiF), and lithium aluminate ($LiAlO_2$).

3. The method for producing a lithium compound with high recovery rate of claim 2,

   wherein in step 1), a precipitant is added to the raw material solution to precipitate the insoluble lithium compound, and
   the equivalent ratio of the precipitant added is 0.5 to 5 with respect to the lithium ions of the raw material solution.

4. The method for producing a lithium compound with high recovery rate of claim 1,
   wherein step 1) comprises:

   1-1) a pretreatment step of producing the raw material solution by concentrating lithium ions in a low-concentration lithium solution through a membrane capacitive deionization process (MCDI); and
   1-2) precipitating an insoluble lithium compound from the raw material solution.

5. The method for producing a lithium compound with high recovery rate of claim 4, wherein the low-concentration lithium solution is derived from one or more of lithium salt lakes, waste liquid from a lithium compound producing process, lithium secondary battery cathode material washing water, and lithium secondary battery recycling process waste liquid.

6. The method for producing a lithium compound with high recovery rate of claim 4,
   wherein in step 1-1), lithium ion concentrations of the low-concentration lithium solution and the raw material solution satisfy the following relational formulas (1) and (2):

$$(1) \quad 1.5 \leq \frac{c_{Li,conc}}{c_{Li,low}} \leq 5$$

$$(2) \quad 2000 mg/L \leq C_{Li,conc} \leq 4000 mg/L$$

where, in the above relational formulas (1) and (2), $\boldsymbol{C_{Li,raw}}$ represents the concentration of lithium ions contained in the low-concentration lithium solution and $\boldsymbol{C_{Li,conc}}$ represents the concentration of lithium ions contained in the raw material solution.

7. The method for producing a lithium compound with high recovery rate of claim 4,

   wherein step 1-1) above is performed repeatedly, but
   when repeating the capacitive deionization process, after lithium ions are adsorbed on the electrode, the remaining solution in the electrode is removed while maintaining the potential at 0.7 to 1.5 V before repeating the capacitive deionization process.

8. The method for producing a lithium compound with high recovery rate of claim 1, wherein the compound represented by General Formula 1 in step 2) is one or more selected from magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na2SO_4$), sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfite ($Fe_2(SO_3)_3$), ferric hyposulfite ($Fe_2(SO_2)_3$), ammonium sulfate (($NH_4)_2SO_4$), aluminum sulfate ($Al_2(SO_4)_3$), aluminum sulfite ($Al_2(SO_3)_3$), and aluminum hyposulfite ($Al_2(SO_2)_3$).

9. The method for producing a lithium compound with high recovery rate of claim 1,
   wherein in step 2), the insoluble lithium compound is subjected to a hydrothermal reaction with an aqueous solution of a compound having the structure of General Formula 1 at a temperature of 40 to 300 °C, and it satisfies the following relational formulas (3) and (4):

$$(3) \quad 50(g/L) \leq \frac{m_{unsol}}{V_{sol}} \leq 500(g/L)$$

$$(4) \quad 0.2 \leq \frac{n_{Li^+}}{n_S} \leq 10$$

where, in the above relational formulas (3) and (4), $m_{unsol}$ represents the mass (g) of the insoluble lithium compound introduced into the hydrothermal reaction, $V_{sol}$ represents the volume (L) of the aqueous solution of the compound having the structure of General Formula 1 introduced into the hydrothermal reaction, $n_{Li^+}$ represents the number of moles of lithium ions introduced into the hydrothermal reaction, and $n_S$ represents the number of moles of sulfur (S) atoms in the aqueous solution of the compound having the structure of General Formula 1.

10. The method for producing a lithium compound with high recovery rate of claim 1, wherein the lithium sulfate aqueous solution produced in step 2) contains lithium ions at a concentration of 10,000 to 34,000 mg/L.

11. The method for producing a lithium compound with high recovery rate of claim 1,
wherein step 3) comprises:

   3-1) purifying the lithium sulfate aqueous solution with an alkaline solvent; and
   3-2) performing a carbonation reaction or hydroxylation reaction on the purified lithium sulfate aqueous solution to obtain lithium carbonate or lithium hydroxide.

12. The method for producing a lithium compound with high recovery rate of claim 11, wherein in step 3-1), it is purified with an alkaline solvent and the pH is adjusted to 9 to 12.5.

13. The method for producing a lithium compound with high recovery rate of claim 1,
wherein the lithium compound for lithium ion recovery is a lithium compound for cathode material raw materials.

**【FIG. 1】**

```
┌─────────────────────────────────────────────┐
│              Lithium raw material             │
│     (low-concentration lithium solution)      │
└─────────────────────────────────────────────┘
              ⬇  Precipitation reaction

┌─────────────────────────────────────────────┐
│          Insoluble lithium compound           │
└─────────────────────────────────────────────┘
              ⬇  Hydrothermal reaction

┌─────────────────────────────────────────────┐
│  High-concentration lithium sulfate solution  │
└─────────────────────────────────────────────┘
              ⬇  Carbonation or hydroxylation reaction

┌─────────────────────────────────────────────┐
│               Lithium compound                │
│ (lithium carbonate and lithium hydroxide)     │
└─────────────────────────────────────────────┘
```

【FIG. 2A】

【FIG.2BB】

【FIG. 3】

【FIG. 4A】

【FIG. 4BB】

【FIG. 5】

【FIG. 6】

【FIG. 7】

## INTERNATIONAL SEARCH REPORT

| International application No. |
|---|
| **PCT/KR2022/004946** |

**A.    CLASSIFICATION OF SUBJECT MATTER**

**C01D 15/06**(2006.01)i

According to International Patent Classification (IPC) or to both national classification and IPC

**B.    FIELDS SEARCHED**

Minimum documentation searched (classification system followed by classification symbols)

C01D 15/06(2006.01); C01B 25/30(2006.01); C01F 7/00(2006.01); C01F 7/04(2006.01); C22B 26/12(2006.01); C22B 3/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬화합물(lithium compound), 황산리튬(lithium sulfate), 수열반응(hydrothermal reaction), 막 축전식 탈염 공정(membrane capacitive deionization, MCDI)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2033607 B1 (SEHWA VL et al.) 17 October 2019 (2019-10-17)<br>      See abstract; paragraphs [0013], [0039], [0044]-[0052], [0054], [0065] and [0083]-[0085]; and claim 1. | 1-3,8-10,13 |
| Y | | 4-7,11,12 |
| Y | SHI, W. et al. Efficient lithium extraction by membrane capacitive deionization incorporated with monovalent selective cation exchange membrane. SEPARATION AND PURIFICATION TECHNOLOGY. 2019, vol. 210, pp. 885-890.<br>      See abstract; and pages 885, 886 and 887. | 4-7 |
| Y | WO 2017-136885 A1 (LITHIUM AUSTRALIA NL) 17 August 2017 (2017-08-17)<br>      See abstract; and claims 19, 20, 23 and 24. | 11,12 |
| A | KR 10-1944522 B1 (KOREA INSTITUTE OF GEOSCIENCE AND MINERAL RESOURCES(KIGAM)) 01 February 2019 (2019-02-01)<br>      See abstract; paragraphs [0037]-[0041], [0049] and [0064]-[0066]; and claims 1-3. | 1-13 |

| ✓ Further documents are listed in the continuation of Box C. | ✓ See patent family annex. |
|---|---|

|  |  |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **25 July 2022** | **26 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2022/004946** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-1944519 B1 (KOREA INSTITUTE OF GEOSCIENCE AND MINERAL RESOURCES(KIGAM)) 01 February 2019 (2019-02-01)<br>See abstract; and claim 1. | 1-13 |
| A | LEE, D.-H. et al. Equilibrium and kinetic studies of an electro-assisted lithium recovery system using lithium manganese oxide adsorbent material. CARBON LETTERS. 2018, vol. 28, pp. 87-95.<br>See abstract; and page 88. | 1-13 |

Form PCT/ISA/210 (second sheet) (July 2019)

**INTERNATIONAL SEARCH REPORT**
**Information on patent family members**

International application No.

**PCT/KR2022/004946**

| Patent document cited in search report | | | Publication date (day/month/year) | Patent family member(s) | | | Publication date (day/month/year) |
|---|---|---|---|---|---|---|---|
| KR | 10-2033607 | B1 | 17 October 2019 | None | | | |
| WO | 2017-136885 | A1 | 17 August 2017 | AU | 2017-218457 | A1 | 23 August 2018 |
| | | | | AU | 2017-218457 | B2 | 21 January 2021 |
| | | | | BR | 112018016253 | A2 | 18 December 2018 |
| | | | | CA | 3013941 | A1 | 17 August 2017 |
| | | | | CA | 3013941 | C | 31 August 2021 |
| | | | | CL | 2018002133 | A1 | 28 December 2018 |
| | | | | EP | 3414351 | A1 | 19 December 2018 |
| | | | | EP | 3414351 | B1 | 11 August 2021 |
| | | | | PT | 3414351 | T | 19 October 2021 |
| | | | | US | 10883157 | B2 | 05 January 2021 |
| | | | | US | 2019-0048438 | A1 | 14 February 2019 |
| KR | 10-1944522 | B1 | 01 February 2019 | None | | | |
| KR | 10-1944519 | B1 | 01 February 2019 | None | | | |

Form PCT/ISA/210 (patent family annex) (July 2019)

22

**EP 4 324 792 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210048398